# EUROPEAN PATENT APPLICATION

(11) **EP 2 796 659 A2**
(43) Date of publication of application: **29.10.2014**
(21) Application number: 14157833.6
(22) Date of filing: 05.03.2014
(51) Int. Cl.: E21B 7/10, E21B 17/10

(54) **Rotary steerable system for vertical drilling**

(30) Priority: 12.03.2013 US 201313797875
(71) Applicant: Weatherford/Lamb, Inc., Houston, TX 77056 (US)
(72) Inventor: MARSON, Dan A, Sherwood Park, Alberta T8A 6G7 (CA); SULLIVAN, Daniel Mark, Cheltenham, Gloucestershire GL52 6RD (GB); PAGETT, John Mackinley, Birmingham, B45 9LR (GB)
(74) Representative: Talbot-Ponsonby, Daniel Frederick

(57) **Abstract**

A rotary steerable drilling system (100) that is operable to drill vertical wellbores and automatically maintain a vertical wellbore drilling path. The system includes a control module (40) for operating solenoid valves that control an amount of fluid pressure applied to bias pad piston/cylinders. The control module is operable to determine when the system is deviating from vertical, in what direction the system is deviating, and where the bias pads (54) are in relation to the direction of deviation. Based on these determinations, the control module actuates the requisite bias pads by controlling the amount of fluid pressure applied to the bias pad piston/cylinders to direct the system back to the vertical drilling path.

## Description

### BACKGROUND OF THE INVENTION

### Field of the Invention

Embodiments of the invention generally relate to steerable drilling systems for drilling vertical wellbores.

### Description of the Related Art

Directional drilling involves varying or controlling the direction of a wellbore as it is being drilled. Usually the goal of directional drilling is to reach or maintain a position within a target subterranean destination or formation with the drilling string. For instance, the drilling direction may be controlled to direct the wellbore towards a desired target destination, to control the wellbore horizontally to maintain it within a desired payzone, or to correct for unwanted or undesired deviations from a desired or predetermined path.

Thus, directional drilling may include deflection or deviation of a wellbore along a predetermined or desired path in order to reach or intersect with, or to maintain a position within, a specific subterranean formation or target. The predetermined path typically includes a depth where initial deflection or deviation occurs and a schedule of desired deviation angles and directions over the remainder of the wellbore. Thus, deflection or deviation is a change in the direction of the wellbore from the current wellbore path.

It is often necessary to adjust the direction of the wellbore frequently while directional drilling, either to accommodate a planned change in direction or to compensate for unintended or unwanted deflection or deviation of the wellbore. Unwanted deflection or deviation may result from a variety of factors, including the characteristics of the formation being drilled, the makeup of the bottomhole drilling assembly, and the manner in which the wellbore is being drilled.

Current steerable drilling systems have expensive steerable equipment and are not cost effective when drilling generally vertical wellbores that do not require the steerable capabilities. It is costly for operators to have both conventional drilling systems for drilling generally vertical wells and steerable drilling systems for drilling deviated wellbores, and switching between the two drilling systems as necessary. Most operators simply use steerable drilling systems for drilling both vertical and deviated wellbores.

There is a need, therefore, for steerable drilling systems that are cost effective and efficient for drilling vertical wellbores.

### SUMMARY OF THE INVENTION

A rotary steerable drilling system for drilling vertical wellbores.

### BRIEF DESCRIPTION OF THE DRAWINGS

So that the manner in which the above recited features of the invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figures 1A and 1B illustrate a rotary steerable drilling system according to one embodiment.
Figures 2A and 2B illustrate a steerable assembly according to one embodiment.
Figures 3A-3C illustrate an outer housing assembly for supporting bias pads.
Figures 4A and 4B illustrate slip ring, control valve, and pump assemblies of the system according to one embodiment.
Figure 5 illustrates an enlarged view of the steerable assembly according to one embodiment.
Figure 6 illustrates the steerable assembly and a collar of the system according to one embodiment.
Figure 7 illustrates an electric/hydraulic schematic of the system according to one embodiment.

### DETAILED DESCRIPTION

Embodiments of the invention relate to a rotary steerable drilling system for drilling wellbores. The system is operable to maintain a substantially vertical wellbore drilling path. If the system begins to deviate from the vertical drilling path (due to the wellbore formation characteristics for example), then the system is operable to automatically self correct and force the system back toward the vertical drilling path trajectory.

The system may be a self contained, electronically controlled, push bit system. The system may be rotated from the surface and/or may include conventional mud motors for providing additional rotational drill bit speed. The system may include one or more individually controllable and replaceable bias pads operable to force or push the drill bit in a desired direction. The bias pads may allow direction control of up to 5 percent over-gauge of the wellbore diameter. In the event of a failure, the system is designed to have a natural drop tendency to drill vertically.

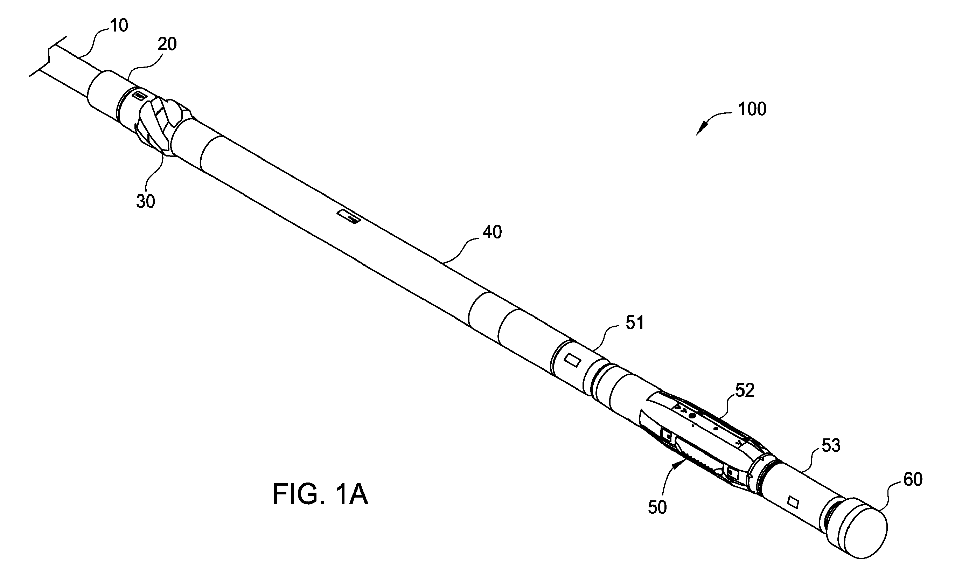

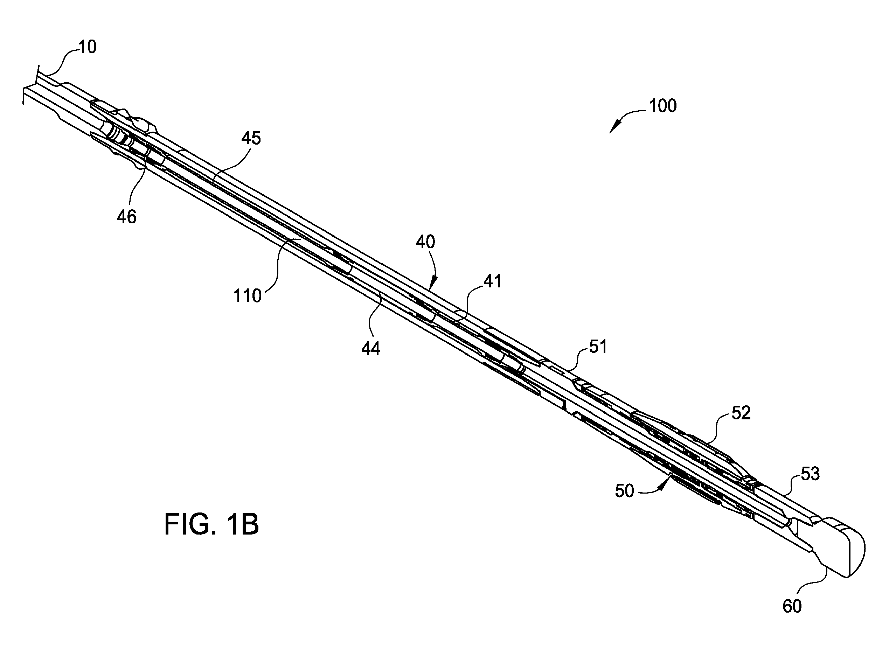

Figures 1A and 1B illustrate a rotary steerable drilling system 100 according to one embodiment. The system 100 includes a drill string 10 for rotating a drill bit 60 from the surface, an optional hydraulically actuated, straight housing motor 20 for providing additional rotational speed, and a stabilizer 30 for maintaining the system 100 within the center of a wellbore while drilling. The drill string 10 may be coupled to a conventional mud motor, which is coupled to a barrel collar, or if no motor is used, the drill string 10 may be coupled to the barrel collar via a drill collar as known in the art.

The system 100 further includes a barrel collar, referred to herein as a control collar 40, for supporting control modules, power supplies, mud pulsers, valves, measurement/logging while drilling components, and/or various other components and electronic packages known in the art. The control collar 40 may include one or more micro-processors, memories, mass storage devices, and well known support circuits such as power supplies, clocks, cache, input/output circuits, and the like. The control collar 40 may include a control module 41, a power supply 44 (such as a battery), a pulser driver 45, and a pulser 46. The control collar 40 may be operable to communicate information to the surface and to one or more components of the system 100 as further described herein. In one embodiment, the control collar 40 is operable to transmit data to the surface via mud pulse telemetry. In one embodiment, the data may include the inclination and/or the rotational speed of the system 100.

The system 100 further includes a self-contained, steerable assembly 50 having rotating sections 51, 53 and a non-rotating section 52 disposed between the rotating sections 51, 53. The rotating section 53 may include a tubular member coupled to the drill bit 60. The rotating section 51 may include a tubular member forming a drive shaft 55 that is disposed through the non-rotating section 52 and that is coupled to the tubular member of the rotating section 53 for transmitting rotation to the drill bit 60. An internal bore 110 may be disposed through the system 100 from the drill string 10 to the drill bit 60.

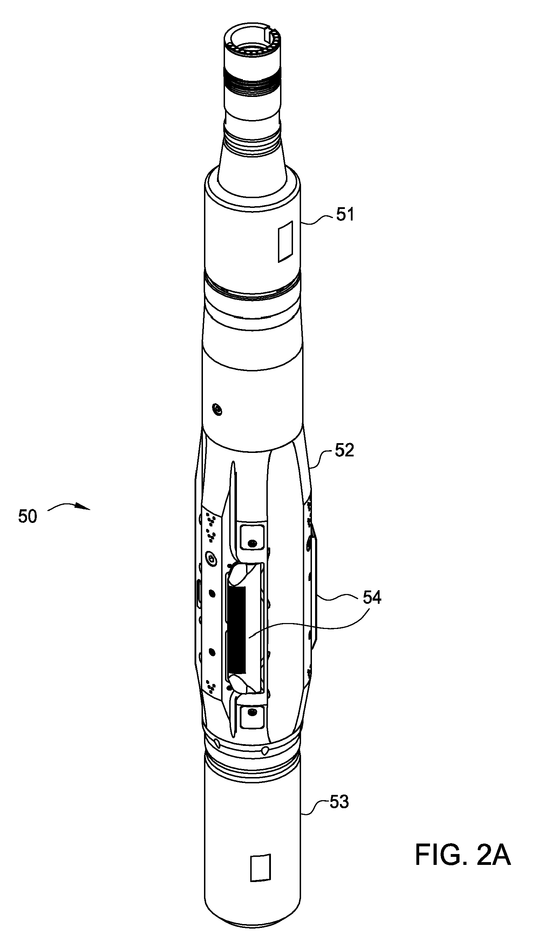

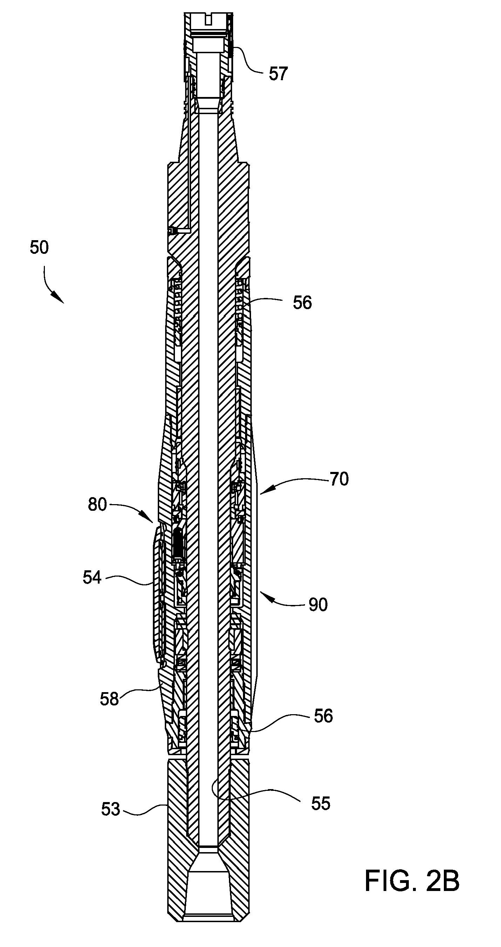

Figures 2A and 2B illustrate the steerable assembly 50 according to one embodiment. The rotating section 51 may include a tubular member for coupling the assembly 50 to the control collar 40 via one or more tubular threaded connections. An electrical connector 57 may be used to electrically connect the control collar 40 to the steerable assembly 50. The drive shaft 55 of the rotating section 51 may extend through the non-rotating section 52 and may be threadedly coupled to the tubular member of the rotating section 53. The non-rotating section 52 may include one or more replaceable bias pads 54 that are supported by an outer housing 58. The outer housing 58 may be coupled to balance pistons 56 (comprising pistons/biasing members) disposed at opposite ends, which are supported by the tubular member of the rotating section 51. The balance pistons 56 create a sealed chamber and balance the pressure between the internal components of the steerable assembly 50 with respect to the surrounding wellbore pressure as known in the art.

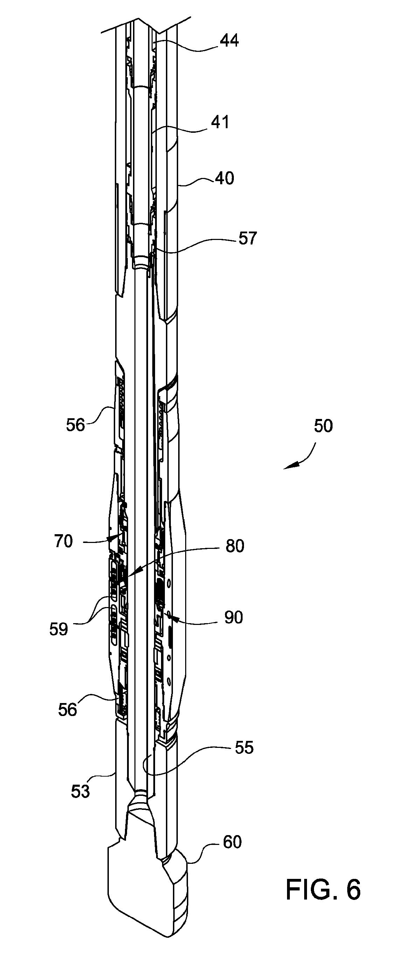

The steerable assembly 50 may further include a slip ring assembly 70, a control valve assembly 80, and a pump assembly 90. The slip ring assembly 70 is operable to communicate between the control module 41 (illustrated in Figure 6) in the control collar 40 and the non-rotating control valve assembly 80. The control valve assembly 80 controls the amount of fluid pressure and thus force that is applied to each bias pad 54. The pump assembly 90 continuously pumps fluid through the self contained steerable assembly 50 between a fluid reservoir, the control valve assembly 80, and at least one piston 59 for biasing each bias pad 54 as further described below.

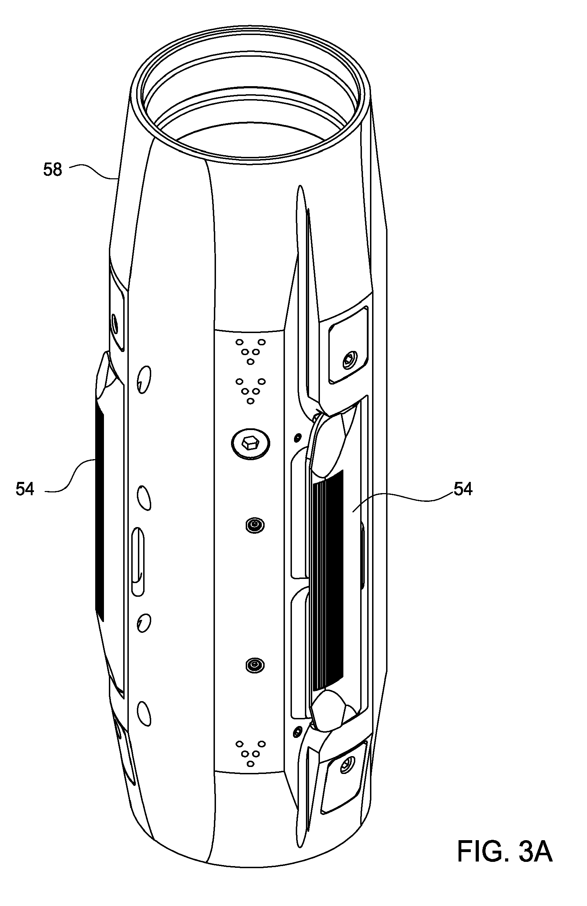

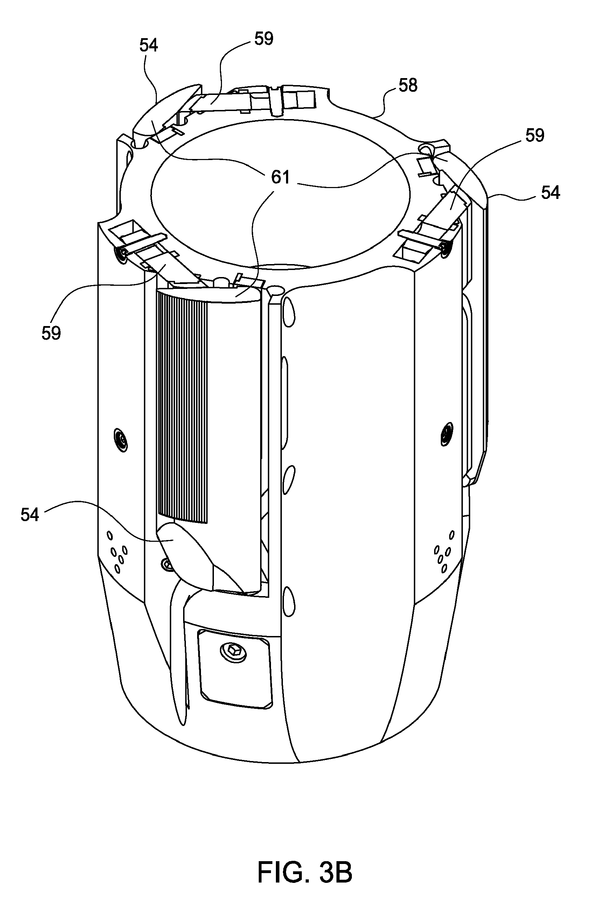

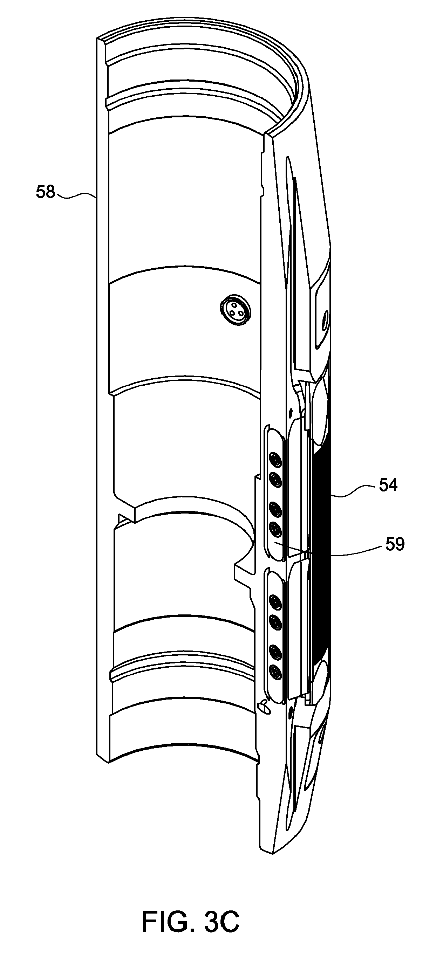

Figures 3A-3C illustrate the outer housing 58 for supporting the bias pads 54 and pistons 59 operable to bias the pads 54 radially outward. Three bias pads 54 are symmetrically and pivotably coupled to the outer housing 58 at a first end 61. The opposite end of each bias pad 54 may be forced radially outward into engagement with the surrounding wellbore by the pistons 59. In one embodiment, the bias pads 54 may be forced directly radially outward into engagement with the surrounding wellbore as opposed to be pivoted or rotated radially outward. Each bias pad 54 may be engaged by one, two, or more pistons 59. The pistons 59 are forced into engagement with the bias pad 54 using pressurized fluid that is driven by the pump assembly 90. The amount of fluid pressure applied to each piston 59 is controlled by the control valve assembly 80.

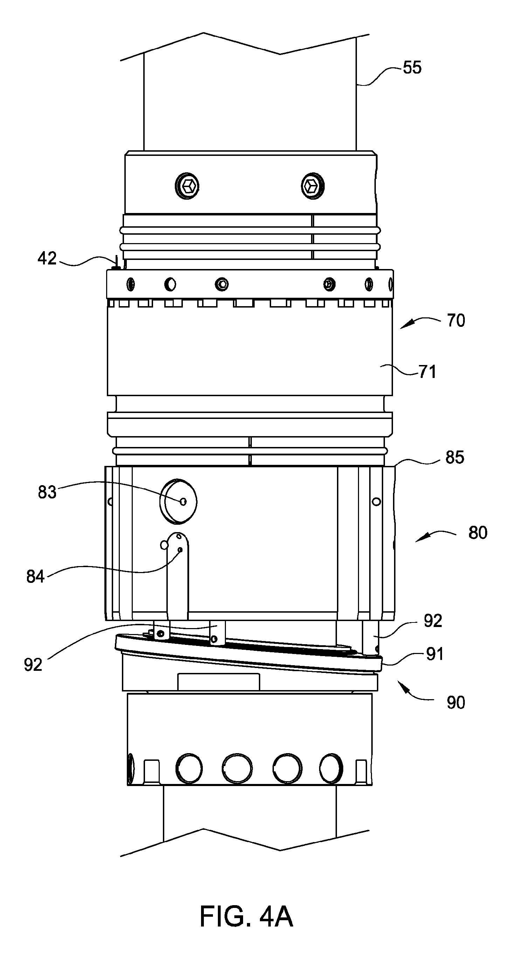

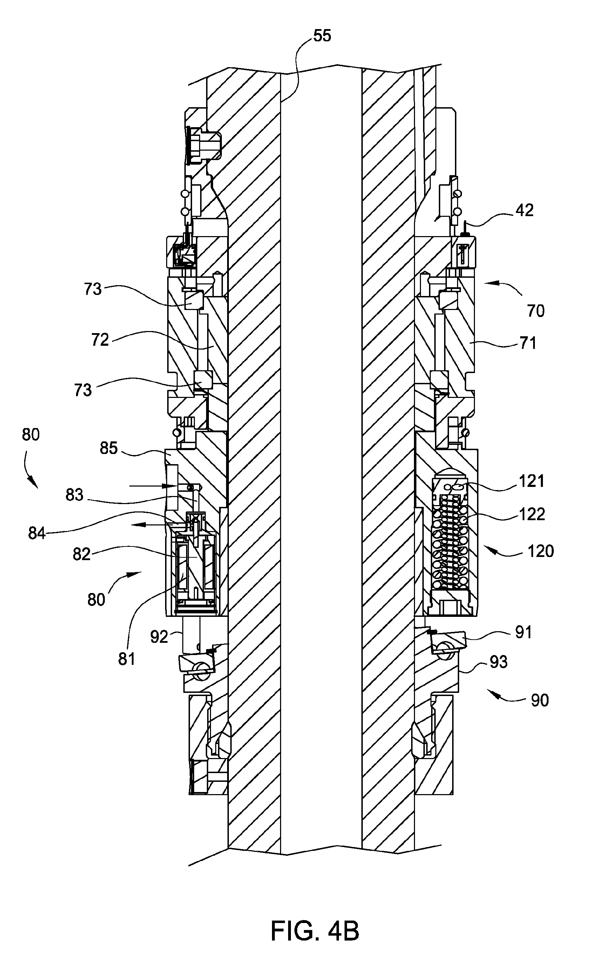

Figures 4A and 4B illustrate the control valve assembly 80 and the pump assembly 90 (with the outer housing 58 removed for clarity). Each bias pad 54 may be controlled individually by one or more control valve assemblies 80 and pump assemblies 90. The control valve assembly 80 may include a support housing 85 for supporting one or more solenoid valves having a coil 81 and a plunger 82. The solenoid valves are hydraulically connected to the pistons 59 of each bias pad 54, and are electrically connected to the control module 41 of the control collar 40 via the slip ring assembly 70. The amount of current flowing through the coil 81 determines the position of the plunger 82 for (at least partially) opening and closing fluid flow into an inlet flow passage 83 and out of an outlet flow passage 84 formed in the support housing 85. The inlet flow passage 83 is in fluid communication with the high pressure side of the pistons 59 acting on the bias pads 54. The outlet flow passage 84 is in fluid communication with the lower pressure return side of the fluid reservoir.

If no current is applied to the coil 81, then the plunger 82 may be moved to a position that permits uninhibited fluid flow from the inlet flow passage 83 to the outlet flow passage 84, thereby minimizing the amount of pressure applied to the pistons 59 and thus applying a minimal, if any, amount of force to the bias pads 54. If a maximum amount of current is applied to the coil 81, then the plunger 82 may be moved to a position that closes or substantially restricts fluid flow from the inlet flow passage 83 to the outlet flow passage 84, thereby maximizing the amount of pressure applied to the pistons 59 and thus applying a maximum amount of force to the bias pads 54 radially outward into engagement with the surrounding wellbore. The control module 41 in the control collar 40 may control the amount of current supplied to the coil 81 of each individual solenoid valve via the slip ring assembly 70, thereby controlling the amount of piston force applied by each bias pad 54 to steer the drill bit 60 in the desired direction when drilling a wellbore. Any type of solenoid valves or other similar control valves known in the art may be used for controlling fluid flow in the steerable assembly 50.

Figure 4B further illustrates an optional accumulator assembly 120 for assisting with the amount of fluid pressure applied to each bias pad 54. The accumulator assembly 120 may include a piston 121 and a biasing member 122, such as a spring. The accumulator assembly 120 may help dampen pressure fluctuations in the steerable assembly 50 when actuating the solenoid valves of the control valve assembly 80. In one embodiment, the accumulator assembly 120 may include a sensor, such as a pressure transducer, for measuring and monitoring the pressure applied to each bias pad 54. The sensor may be in communication with the control module located in the control collar 40 via the slip ring assembly 70 as further described herein. In one embodiment, the sensor may include a Hall Effect sensor, as known in the art, for measuring the position of the piston 121, calculating the amount of pressure applied to each bias pad 54, and communicating the measured pressure to the control module 41.

Fluid flowing through the self contained steerable assembly 50 is driven by one or more pump assemblies 90 for each bias pad 54. The pump assembly 90 may include swash plate pump as known in the art. The pump assembly 90 may include a plate member 91 supported by a body 93 that is rotationally coupled to the drive shaft 55. The plate member 91 is arranged at an eccentric position or angle relative to the longitudinal axis of the steerable assembly 50. One or more piston/cylinders 92 positioned parallel to the longitudinal axis of the steerable assembly 50 are stroked in and out by rotation of the plate member 91 via the drive shaft 55. In this manner, the pump assembly 90 continuously pumps fluid through the self contained steerable assembly 50 during operation of the system 100. As stated above, the fluid flow driven by the pump assembly 90 is controlled by the control valve assemblies 80 to selectively actuate the bias pads 54 as desired.

Further illustrated in Figures 4A and 4B is the slip ring assembly 70 for providing an electrical connection across a rotating interface. In particular, the control module 41 in the control collar 40 rotates with the drive shaft 55 and provides electronic signals to the non-rotating solenoid valves of the control valve assembly 80. The slip ring assembly 70 includes a ring member 72 having one or more contact rings (such as copper rings) that rotate with the drive shaft 55 and that are electrically connected to the control module 41 of the control collar 40. The slip ring assembly 70 further includes a support housing 71 for supporting one or more contact members (such as brushes) that are non-rotatively coupled to the outer housing 58 and that are electrically connected to the non-rotating solenoid valves of the control valve assembly 80. One or more seal and/or bearing members 73 may be disposed between the support housing 71 and the ring member 72. The non-rotating contact members of the support housing 71 contact the contact rings of the rotating ring member 72, thereby providing an electrical connection across a rotating interface. In this manner, electronic signals can be sent from the control module 41 in the rotating control collar 40 to the solenoid valves in the non-rotating control valve assembly 80 to control the bias of the bias pads 54 and thus the direction of the drill bit 60.

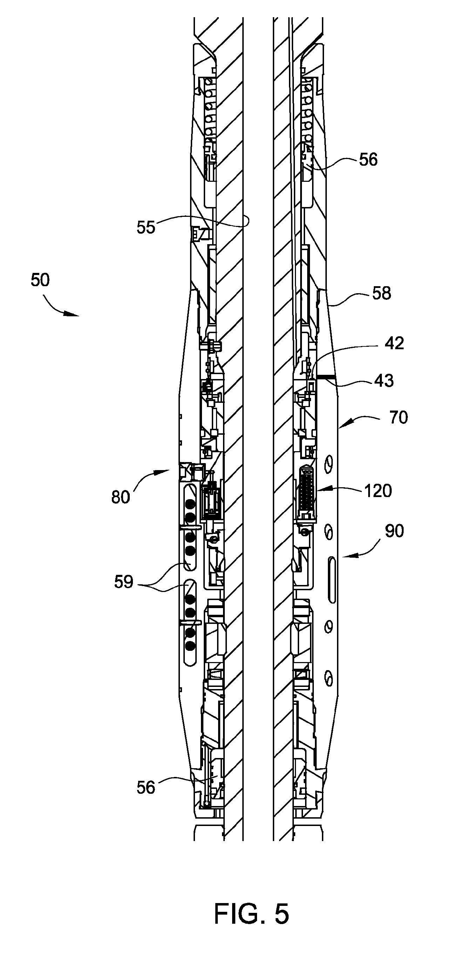

Figure 5 illustrates an enlarged view of the steerable assembly 50. In particular, Figure 5 illustrates the slip ring assembly 70, the control valve assembly 80, and the pump assembly 90 disposed within the outer housing 58 that supports the bias pads 54. The drive shaft 55 extends through the slip ring assembly 70, the control valve assembly 80, the pump assembly 90, and the outer housing 58.

Figure 6 illustrates the steerable assembly 50 coupled to the control collar 40 by one or more threaded tubular connections. The control collar 40 encloses the control module 41, a power supply 44 (such as a battery), and the electrical connector 57 for controlling and continuously monitoring the operation of the system 100. In particular, the control module 41 is operable to maintain the rotary steerable drilling system 100 in a substantially vertical wellbore drilling path. While drilling a vertical wellbore, if the system 100 begins to deviate from the vertical path (due to the wellbore formation characteristics for example), then the control module 41 is configured to sense the deviation and actuate the bias pad 54 as necessary to direct the system 100 back to the vertical wellbore path trajectory.

To maintain the system 100 on a vertical drilling path, the control module 41 includes at least two accelerometers mounted about 180 degrees apart within the control collar 40, which are configured to identify the "highside" of the wellbore when deviated from vertical. The highside of the wellbore is the side of the wellbore circumference at a specific point along the wellbore that is closest to the surface when the wellbore deviates from vertical. When the highside of the wellbore is determined, the system 100 is forced via the bias pads 54 toward the opposite, lowside of the wellbore to push the system 100 back to the vertical drilling path. In one embodiment, the sinusoidal outputs of the accelerometers may be communicated to the control module 41, which may use the outputs to calculate and determine where the wellbore is relative to gravity.

In addition to determining where the highside of the wellbore is, the control module 41 determines where each bias pad 54 is located relative to the highside of the wellbore. To determine the position of each bias pad 54, the control module 41 receives a signal from a sensor 42 (illustrated in Figures 4A, 4B, and 5) that is coupled to the rotating drive shaft 55. The sensor 42 rotates with the drive shaft 55 and senses at least one stationary marker 43 (illustrated in Figure 5) that is coupled to the outer housing 58. Only one stationary marker 43 may be needed to identify the location of one bias pad 54, while the locations of the other bias pads 54 can be determined by being disposed about 120 degrees and about 240 degrees apart from the one bias pad 54 and/or stationary marker 43. As the sensor 42 rotates, it senses the location of each marker 43 and thus each bias pad 54 and communicates the location to the control module 41. In one embodiment, the sensor 42 may include a Hall Effect device as known in the art that produces an electronic pulse once per revolution to sense and measure the location of the markers 43, which information is communicated to the control module 41 to calculate and define the rotational position of each bias pad 54 relative to the highside of the wellbore.

Based on the determinations of the highside of the wellbore and the position of each bias pad 54, the control module 41 can determine which solenoid valves of the control valve system 80 to activate to force or push the system 100 back to vertical. The control module 41 controls the force applied to each specific bias pad 54 by controlling the actuation of the solenoid valves of the control valve assembly 80 for each bias pad 54 to direct the system 100 toward the opposite, lowside of the wellbore and back to the vertical drilling path. The control module 41 can vary the amount of force applied by each bias pad 54 by controlling the amount of current supplied to the solenoid valves of the control valve assembly 80 for each individual bias pad 54.

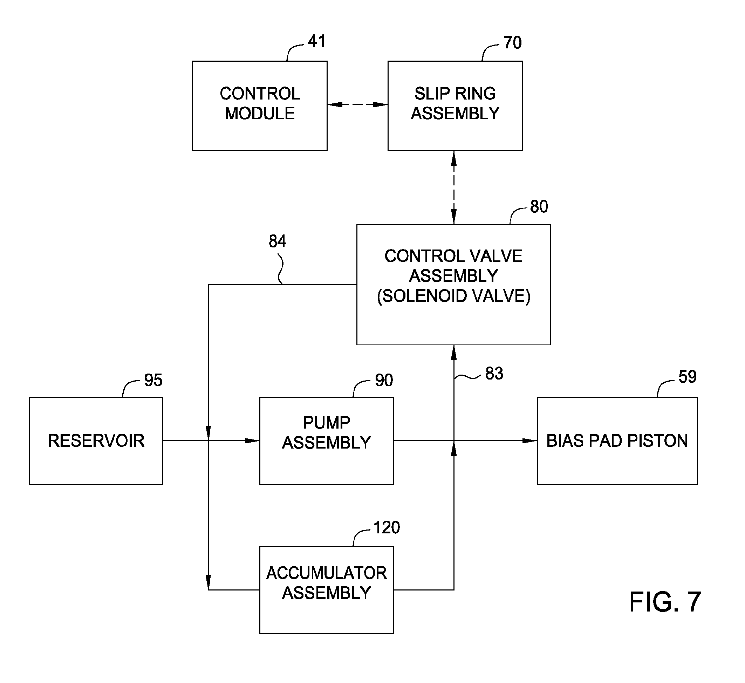

Figure 7 illustrates an electric/hydraulic schematic of the system 100. The control module 41 is electrically connected to the solenoid valves of the control valve assembly 80 via the slip ring assembly 70. The control valve assembly 80 may control the fluid flow through the inlet and outlet flow passages 83, 84 to control the amount of fluid pressure applied to each bias pad piston 59. The pump assembly 90 continuously pumps fluid through the system 100 while the drive shaft 55 rotates the drill bit 60. Fluid may be drawn from a reservoir 95 disposed in the outer housing 58. The accumulator system 120 may be operable to dampen rapid fluid pressure fluctuations in the system 100 to ensure that a smooth and constant force is applied to each piston 59 of each bias pad 54.

In operation, the drill bit 60 of the rotary steerable drilling system 100 may be rotated from the surface via the drill string 10 and/or downhole by the hydraulically actuated motor 20 to drill a vertical wellbore. Rotation is transmitted to the control collar 40, the steerable assembly 50, and the drill bit 60. The drive shaft 55 extends through the non-rotating outer housing 58 and rotates the drill bit 60. The control module 41 in the control collar 40 continuously monitors and measures the vertical trajectory of the wellbore using one or more sensors, such as accelerometers. In the event that the system 100 begins to deviate from vertical, the control module 41 determines the direction of deviation by measuring the highside of the wellbore. The one or more sensors 42 continuously monitor and measure the locations of each bias pad 54 and transmit the information to the control module 41 via the slip ring assembly 70. Based on the locations of the bias pads 54 relative to the highside of the wellbore, the control module 41 actuates one or more of the solenoid valves of the control valve assembly 80 to control the amount of fluid pressure applied to the pistons 59 of each bias pad 54.

The piston/cylinders 92 of the pump assembly 90 are continuously stroked by rotation of the drive shaft 55 to drive pressurized fluid to the pistons 59 of each bias pad 54. The amount of fluid pressure applied to each bias pad 54 is controlled by the solenoid valves of the control valve assembly 80. Depending on the amount of current supplied to the solenoid valves by the control module 41, the control valve assembly 80 either allows fluid flow, prevents fluid flow, or at least partially inhibits fluid flow through the inlet and outlet flow passages 83, 84. Inhibiting or preventing fluid flow through the inlet flow passage 83 controls and increases the amount of fluid pressure applied to the pistons 59 of each bias pad 54.

The control module 41 will control the actuation of each solenoid valve to obtain the requisite amount of bias force from each bias pad 54 to force or push the drill bit 60 back to the vertical drilling path trajectory. In this manner, the system 100 is operable to continuously monitor the vertical drilling path trajectory and the position of each bias pad 54 relative to the wellbore. The system 100 is further operable to self adjust its trajectory when deviated from vertical. The system 100 may communicate its operational characteristics (rotational speed, inclination, etc.) to the surface via hydraulic (mud pulse) telemetry or other communication mechanisms known in the art.

While the foregoing is directed to embodiments of the invention, other and further embodiments of the invention may be devised without departing from the basic scope thereof, and the scope thereof is determined by the claims that follow.

## Claims

1. A drilling system, comprising:
a control valve;
a control module configured to actuate the control valve;
a slip ring configured to transmit an electronic signal from the control module to the control valve, while the control module rotates relative to the control valve;
a bias pad having a piston that is in fluid communication with the control valve, wherein actuation of the control valve controls an amount of fluid pressure applied to the piston.

2. A method of forming a wellbore, comprising:
drilling a wellbore along a vertical trajectory using a drilling system;
monitoring any deviation from the vertical trajectory of the wellbore;
determining that the drilling system has deviated from the vertical trajectory;
determining a highside of the wellbore;
determining a position of bias pads of the drilling system; and
actuating at least one of the bias pads to force the drilling system toward the vertical trajectory.
